# EUROPÄISCHE PATENTSCHRIFT

(11) **EP 4 331 344 B1**
(45) Veröffentlichungstag und Bekanntmachung des Hinweises auf die Patenterteilung: **15.04.2026**
(21) Anmeldenummer: 23179441.3
(22) Anmeldetag: 15.06.2023
(51) Int. Cl.: A01D 43/08, A01D 41/127

(54) **VERFAHREN ZUM BESTIMMEN EINES VERSCHLEISSZUSTANDS EINER SELBSTFAHRENDEN LANDWIRTSCHAFTLICHEN ERNTEMASCHINE**
METHOD FOR DETERMINING A WEAR STATE OF A SELF-PROPELLED AGRICULTURAL HARVESTER
PROCÉDÉ DE DÉTERMINATION D'UN ÉTAT D'USURE D'UNE MOISSONNEUSE AGRICOLE AUTOMOTRICE

(30) Priorität: 24.08.2022 DE 102022121398
(43) Veröffentlichungstag der Anmeldung: 06.03.2024
(73) Patentinhaber: CLAAS Selbstfahrende Erntemaschinen GmbH, 33428 Harsewinkel (DE)
(72) Erfinder: Neitemeier, Dennis, 59510 Lippetal (DE); Witte, Johann, 58730 Fröndenberg (DE); Klein-Helmkamp, Marwin, 49565 Bramsche (DE); Bönig Dr., Ingo, 33330 Gütersloh (DE); Cord-Kruse, Christian, 48231 Warendorf (DE)
(74) Vertreter: CLAAS Gruppe

(56) Entgegenhaltungen:
- EP-A1- 2 225 931
- EP-A1- 3 970 467
- DE-A1- 102017 103 537

## Beschreibung

Die vorliegende Anmeldung betrifft ein Verfahren zum Bestimmen eines Verschleißzustands mindestens eines Arbeitsaggregats einer selbstfahrenden landwirtschaftlichen Erntemaschine, insbesondere eines Feldhäckslers, gemäß dem Oberbegriff des unabhängigen Patentanspruchs 1 sowie eine solche selbstfahrende landwirtschaftliche Erntemaschine, insbesondere einen Feldhäcksler, gemäß dem unabhängigen Patentanspruch 15.

Während einer nur sehr kurzen Erntesaison ist es erforderlich die Ernteprozesse mit einer hohen Effizienz durchzuführen, um eine ausreichend hohe Wirtschaftlichkeit zu erzielen. Neben dem nur kurzen Zeitfenster zur Durchführung der Ernteprozesse lastet ein zusätzlicher Druck auf den Landwirten und Lohnunternehmern durch die sich stetig und oftmals kurzfristig wandelnden ökologischen und ökonomischen Randbedingungen. Wesentlich für eine effiziente Durchführung von Arbeitsaufträgen ist dabei, den Zustand von Arbeitsaggregaten der Erntemaschine, wie Antriebsmotoren, Getriebe, Drusch-, Abscheide-, Reinigungs-, Häckselaggregate oder dergleichen, zu überwachen, um sicherzustellen, dass verschleißbedingte Defekte der Arbeitsaggregate oder der Erntemaschine während der nur kurzen Erntesaison verhindert, zumindest jedoch rechtzeitig erkannt werden.

Aus der DE 10 2017 103 537 A1 ist in diesem Zusammenhang beispielsweise eine Erfassungsanordnung mit einer Magnetanordnung zur Erfassung eines Verschleißzustands eines Häckselwerks eines zur Verarbeitung eines Gutstroms vorgesehenen Feldhäckslers bekannt. Aus der EP 3 970 467 A1 ist ein Verfahren zum Bestimmen eines Verschleißzustands mindestens eines Arbeitsaggregats einer selbstfahrenden landwirtschaftlichen Erntemaschine nach dem Oberbegriff des Anspruchs 1 bekannt.

Demnach ist es grundsätzlich bekannt, den Verschleißzustand von Arbeitsaggregaten einer Erntemaschine mittels einer geeigneten Sensoreinrichtung zu bestimmen. Basierend hierauf kann dann beispielsweise im Falle eines Feldhäckslers die Schneidkantengeometrie eines verschlissenen Häckselmessers einer Messertrommel eines Häckselwerks durch ein Nachschleifen des Häckselmessers wiederhergestellt werden.

Damit eine hohe Wirtschaftlichkeit erzielt werden kann, ist es erforderlich neben einer effizienten Durchführung der Arbeitsaufträge auch vor- und nachgelagerte mit dem Arbeits- bzw. Ernteauftrag verbundene Arbeiten effizient durchzuführen. Der Verschleiß von Arbeitsaggregaten kann dabei nicht nur in einem Defekt bzw. Ausfall des Arbeitsaggregats bzw. der Erntemaschine resultieren, sondern auch für die Abrechnungen von Arbeitsaufträgen, die Planung einer Anbau- und/oder Erntestrategie und/oder die Wartung der Arbeitsaggregate bzw. der Erntemaschine relevant sein bzw. werden. Weiterhin hat der Verschleiß der Arbeitsaggregate einen wesentlichen Einfluss auf den Prozess der Erntemaschine. Verschlissene Arbeitsaggregate oder verschlissene Komponenten von Arbeitsaggregaten haben zur Folge, dass das Arbeitsergebnis der Erntemaschine nicht dem Sollwert entspricht.

Mittels der herkömmlichen Sensoreinrichtung ist zwar die Bestimmung eines Verschleißzustands an und für sich möglich, allerdings besteht keine Möglichkeit den bestimmten Verschleißzustand oder zeitlichen Verschleißverlauf in Bezug zu einer landwirtschaftlichen Fläche und/oder einem auf der landwirtschaftlichen Fläche durchgeführten Arbeitsauftrag zu setzen.

Ausgehend hiervon ist es demnach die Aufgabe der vorliegenden Erfindung, ein Verfahren anzugeben, das Verschleißzustände von Arbeitsaggregaten einer selbstfahrenden landwirtschaftlichen Erntemaschine mit einer von der Erntemaschine bearbeiteten landwirtschaftlichen Fläche und/oder einem auf dieser landwirtschaftlichen Fläche durch die Erntemaschine durchgeführten Arbeitsauftrag korreliert, um eine effizientere Durchführung eines Ernteprozesses einschließlich etwaiger dem eigentlichen Arbeitsauftrag auf der landwirtschaftlichen Fläche vor- und/oder nachgelagerter Arbeitsschritte zu gewährleisten.

Diese Aufgabe wird erfindungsgemäß durch die Merkmale des unabhängigen Patentanspruchs 1 gelöst, wobei vorteilhafte Weiterbildungen des erfindungsgemäßen Verfahrens Gegenstand der entsprechenden abhängigen Patentansprüche 2 bis 14 sind.

Demnach betrifft die vorliegende Erfindung ein Verfahren zum Bestimmen eines Verschleißzustands mindestens eines Arbeitsaggregats einer selbstfahrenden landwirtschaftlichen Erntemaschine, insbesondere eines Feldhäckslers. Mittels mindestens einer Sensoreinrichtung der Erntemaschine werden Betriebsdaten des mindestens einen Arbeitsaggregats zu einer Vielzahl an Zeitpunkten vor, während und/oder nach einer Durchführung eines Arbeitsauftrags auf einer landwirtschaftlichen Fläche durch die Erntemaschine ermittelt. Mittels einer Positionsbestimmungseinrichtung der Erntemaschine werden Positionsdaten der Erntemaschine auf der landwirtschaftlichen Fläche zu der Vielzahl an Zeitpunkten vor, während und/oder nach der Durchführung des Arbeitsauftrags durch die Erntemaschine ermittelt. Das Verfahren ist dadurch gekennzeichnet, dass die Betriebsdaten und Positionsdaten an eine Datenbank übermittelt werden, wobei die Betriebsdaten und die Positionsdaten einander zugeordnet in der Datenbank hinterlegt werden, wobei die Sensoreinrichtung und die Positionsbestimmungseinrichtung jeweils mit der Datenbank zur Übertragung von Daten kommunizieren. Mittels einer Verarbeitungseinrichtung wird ein ortsreferenzierter Verschleißzustand des mindestens einen Arbeitsaggregats zu jedem Zeitpunkt der Vielzahl an Zeitpunkten durch ein Verarbeiten der in der Datenbank hinterlegten Betriebsdaten und Positionsdaten in einer Analyseroutine bestimmt, wobei die Verarbeitungseinrichtung mit der Datenbank zur Übertragung von Daten kommuniziert.

Das erfindungsgemäße Verfahren erlaubt demnach einerseits eine äußerst präzise und zuverlässige Bestimmung von Verschleißzuständen eines Arbeitsaggregats einer Erntemaschine zu verschiedenen Zeitpunkten und andererseits die Zuordnung dieser Verschleißzustände zu einem Ort- bzw. einer Position der Erntemaschine, an dem/der sich die Erntemaschine zu den verschiedenen Zeitpunkten auf der landwirtschaftlichen Fläche befunden hat. Mit anderen Worten, es werden Verschleißzustände des Arbeitsaggregats zu verschiedenen Zeitpunkten mit einem eindeutigen Bezug zu einer Position der Erntemaschine auf der landwirtschaftlichen Fläche zu diesen verschiedenen Zeitpunkten erhalten. Hierdurch wird es möglich den Ernteprozess, der den Arbeitsauftrag auf der landwirtschaftlichen Fläche sowie dem Arbeitsauftrag vor- und nachgelagerte Arbeitsschritte umfasst, den Betrieb der Erntemaschine an und für sich sowie die Planung zukünftige Ernteprozesse effizienter und transparenter zu gestalten.

Die für die Bestimmung des ortsreferenzierten Verschleißzustands des Arbeitsaggregats erforderlichen Verfahrensschritte laufen vorzugsweise automatisch und ohne ein Eingreifen einer Person ab. Mittels der Positionsbestimmungseinrichtung wird automatisch ermittelt, wann sich die Erntemaschine auf der landwirtschaftlichen Fläche befindet, auf der der Arbeitsauftrag durchgeführt werden soll, wodurch das erfindungsgemäße Verfahren initiiert wird. Alternativ wäre es auch möglich, dass ein Bediener der Erntemaschine das Verfahren initiiert, sobald sich die Erntemaschine auf der zu bearbeitenden landwirtschaftlichen Fläche befindet.

Mittels der Sensoreinrichtung werden dann zu einer Vielzahl an Zeitpunkten vor, während und/oder nach der Durchführung des Arbeitsauftrags Betriebsparameter des Arbeitsaggregats ermittelt. Gleichzeitig werden mittels der Positionsbestimmungseinrichtung Positionsdaten der Erntemaschine auf der landwirtschaftlichen Fläche, auf der der Arbeitsauftrag durchgeführt wird, zu der Vielzahl an Zeitpunkten ermittelt. Basierend auf diesen Daten, die an die Datenbank übermittelt werden, wird zu jedem Zeitpunkt der Vielzahl an Zeitpunkten mittels der Verarbeitungseinrichtung der Verschleißzustand des Arbeitsaggregats, zu dem die Daten vorliegen, mit einem eindeutigen Bezug zur Position der Erntemaschine auf der landwirtschaftlichen Fläche zu dem entsprechenden Zeitpunkt bestimmt. Die ermittelten Daten werden hierzu mittels der Verarbeitungseinrichtung in einer Analyseroutine verarbeitet.

In der Analyseroutine, die der Bestimmung des Verschleißzustands des Arbeitsaggregats dient, wird ein Analysealgorithmus angewendet, der aus den ermittelten Daten den exakt zu dem Zeitpunkt, an dem die Daten ermittelt wurden, vorliegenden Verschleißzustand des Arbeitsaggregats bestimmt und diesem eine Ortsreferenz der Erntemaschine auf der landwirtschaftlichen Fläche zuweist. Neben klassischen Analysealgorithmen, beispielsweise einer Fast-Fourier-Transformation, kann der in der Analyseroutine angewendete Analysealgorithmus auch ein lernfähiger Analysealgorithmus, also ein Analysealgorithmus, der auf einer künstlichen Intelligenz, vorzugsweise einem künstlichen neuronalen Netz, basiert. Der lernfähige Analysealgorithmus wird vor der Durchführung einer ersten Bestimmung eines ortsreferenzierten Verschleißzustands mittels eines Initialdatensatzes, der mittels manueller Annotation vorgenommene Zuordnungen von verschiedenen Betriebsparametern von Arbeitsaggregaten und entsprechenden Verschleißzuständen der Arbeitsaggregate definiert, trainiert. Die während der Durchführung des erfindungsgemäßen Verfahrens ermittelten Daten und bestimmten Verschleißzustände können zum weiteren Trainieren des Analysealgorithmus verwendet werden.

Gemäß einer vorteilhaften Weiterbildung der Erfindung ist vorgesehen, dass, mittels der Verarbeitungseinrichtung, in Abhängigkeit des ortsreferenzierten Verschleißzustands des mindestens einen Arbeitsaggregats bei der Durchführung des Arbeitsauftrags verschleißbedingte verursachte Kosten, eine Verschleißursache, eine zukünftige Anbaustrategie auf der landwirtschaftlichen Fläche, eine zukünftige Erntestrategie für die landwirtschaftliche Fläche und/oder ein Wartungsintervall des mindestens einen Arbeitsaggregats bestimmt werden.

Hierdurch werden Daten generiert, die für die vor- und nachgelagerten Arbeitsschritte eines Ernteprozesses von erheblicher Relevanz sind, Einfluss auf zukünftige Prozesse auf der landwirtschaftlichen Fläche haben, unmittelbar vom Verschleiß des Arbeitsaggregats abhängen, und sonst nicht hinreichend oder gar nicht durch eine Person zu ermitteln sind. Eine effiziente und transparente Durchführung von dem eigentlichen Arbeitsauftrag, der durch die Erntemaschine auf der landwirtschaftlichen Fläche durchgeführt wird, vor- und nachgelagerten Arbeitsschritte wird hierdurch ermöglicht.

Gemäß einer vorteilhaften Weiterbildung der Erfindung ist vorgesehen, dass, mittels der Verarbeitungseinrichtung, anhand eines zu einem Zeitpunkt unmittelbar vor der Durchführung des Arbeitsauftrags bestimmten ortsreferenzierten Verschleißzustands des mindestens einen Arbeitsaggregats und eines zu einem Zeitpunkt unmittelbar nach der Durchführung des Arbeitsauftrags bestimmten ortreferenzierten Verschleißzustands des mindestens einen Arbeitsaggregats eine ortsreferenzierte Verschleißkennzahl für das mindestens eine Arbeitsaggregat bestimmt wird.

Vorzugsweise werden anhand der ortsreferenzierten Verschleißkennzahl die bei der Durchführung des Arbeitsauftrags verschleißbedingt verursachten Kosten bestimmt.

Ergänzend oder alternativ hierzu wird anhand der ortsreferenzierten Verschleißkennzahl das Wartungsintervall für das mindestens eine Arbeitsaggregat bestimmt.

Die Bestimmung einer ortsreferenzierten Verschleißkennzahl, die den während eines durchgeführten Arbeitsauftrags entstandenen Verschleiß an dem Arbeitsaggregat der Erntemaschine ortsbezogen repräsentiert, hat eine Vielzahl an Vorteilen. Zum einen wird für eine Person, beispielsweise einen Landwirt oder einen Lohnunternehmer, dem die Erntemaschine und/oder die landwirtschaftliche Fläche, auf der der Arbeitsauftrag durch die Erntemaschine durchgeführt wurde, unmittelbar ersichtlich zu welchem Verschleiß die Durchführung des Arbeitsauftrags an einem Arbeitsaggregat geführt hat, wodurch unmittelbar ersichtlich wird, welche Kosten aufgrund von Verschleiß an dem Arbeitsaggregaten bei der Durchführung des Arbeitsauftrags entstanden sind und wo diese Kosten während der Durchführung des Arbeitsauftrags auf der landwirtschaftlichen Fläche entstanden sind. Diese Kosten können dann in die Berechnung der gesamten Betriebskosten einfließen.

Das Bestimmen einer Verschleißkennzahl ist weiterhin für die Bestimmung von Wartungsintervallen von Vorteil, so dass die Arbeitsaggregate bzw. die vor der Durchführung eines nachfolgenden Arbeitsauftrags stets in einem hinreichend gewarteten Zustand vorliegt. Hierdurch werden Ausfallzeiten der Erntemaschine erheblich reduziert, da die Wartung von Arbeitsaggregaten zu Zeiten stattfinden kann, an denen die Erntemaschine nicht in Betrieb ist.

Gemäß einer vorteilhaften Weiterbildung der Erfindung ist vorgesehen, dass, mittels einer mit der Verarbeitungseinrichtung zur Übertragung von Daten kommunizierenden Anzeigeeinrichtung, der ortsreferenzierte Verschleißzustand des mindestens einen Arbeitsaggregats, die bei der Durchführung des Arbeitsauftrags verschleißbedingt verursachten Kosten, die Verschleißursache, die zukünftige Anbaustrategie auf der landwirtschaftlichen Fläche, die zukünftige Erntestrategie für die landwirtschaftliche Fläche und/oder das Wartungsintervall des mindestens einen Arbeitsaggregats angezeigt wird.

Vorzugsweise wird mittels der Anzeigeeinrichtung ein Verlauf des ortsreferenzierten Verschleißzustands des mindestens einen Arbeitsaggregats und/oder der ortsreferenzierte Verschleißzustand des mindestens einen Arbeitsaggregats kartiert angezeigt.

Hierdurch werden einer Person die unmittelbar aus dem Verschleißzustand resultierenden Informationen zugänglich gemacht, wodurch die Person in die Lage versetzt wird entsprechend des ihr/ihm dargestellten Informationsgehalt Handlungen betreffend die Erntemaschine selbst oder den Ernteprozess vorzunehmen. Die Darstellung kann dabei wahlweise textbasiert und/oder grafisch erfolgen.

Gemäß einer vorteilhaften Weiterbildung der Erfindung ist vorgesehen, dass, mittels mehrerer Sensoreinrichtungen, gleichzeitig Betriebsdaten einer Vielzahl an Arbeitsaggregaten der Erntemaschine zu der Vielzahl an Zeitpunkten vor, während und/oder nach der Durchführung des Arbeitsauftrags bestimmt werden, wobei, mittels der Verarbeitungseinrichtung, gleichzeitig der ortsreferenzierte Verschleißzustand der Vielzahl an Arbeitsaggregaten bestimmt wird.

Vorzugsweise wird anhand des ortsreferenzierten Verschleißzustands der Vielzahl an Arbeitsaggregaten ein Verschleißzustand der Erntemaschine bestimmt.

Demnach kann das erfindungsgemäße Verfahren nicht nur dazu verwendet werden, den Verschleißzustand genau eines Arbeitsaggregats zu verschiedenen Zeitpunkten zuverlässig zu bestimmen. Vielmehr können zeitgleich Betriebsdaten einer Vielzahl an Arbeitsaggregaten ermittelt werden, anhand derer anschließend gemeinsam mit den Positionsdaten mittels der Verarbeitungseinrichtung ein ortsreferenzierter Verschleißzustand jedes dieser Arbeitsaggregate zu den verschiedenen Zeitpunkten bestimmt werden kann. Aus der Gesamtheit der einzelnen ortsreferenzierten Verschließzustände der einzelnen Arbeitsaggregate kann dann der Verschleißzustand der Erntemaschine zuverlässig bestimmt.

Als Sensoreinrichtungen kommen sämtliche an einer Erntemaschine angeordnete und bekannte berührungslos und berührend arbeitende Sensoren, die der Ermittlung von Betriebsparametern dienen, in Frage.

Gemäß einer vorteilhaften Weiterbildung der Erfindung ist vorgesehen, dass die Bestimmung des ortsreferenzierten Verschleißzustands des mindestens einen Arbeitsaggregats, der bei der Durchführung des Arbeitsauftrags verschleißbedingt verursachten Kosten, der Verschleißursache, der zukünftigen Anbaustrategie auf der landwirtschaftlichen Fläche, der zukünftigen Erntestrategie für die landwirtschaftliche Fläche und/oder des Wartungsintervalls des mindestens einen Arbeitsaggregats unter Berücksichtigung von Referenzdaten erfolgt.

Vorzugsweise umfassen die Referenzdaten in der Datenbank hinterlegte Kennfelddaten des mindestens einen Arbeitsaggregats und/oder der Erntemaschine, historische Daten zu Verschleißzuständen des mindestens einen Arbeitsaggregats, Geometriedaten des mindestens einen Arbeitsaggregats und/oder der Erntemaschine, Lastkollektive des mindestens einen Arbeitsaggregats und/oder der Erntemaschine, Wetterdaten und/oder agronomische Daten der landwirtschaftlichen Fläche, insbesondere Bodendaten, Bestandsdaten, Ertragsdaten und/oder Flächendaten.

Die Verwendung von Referenzdaten als weitere Eingangsgröße in der Analyseroutine sorgt für eine erhebliche Steigerung der Genauigkeit bei der Bestimmung des ortsreferenzierten Verschleißzustands des mindestens einen Arbeitsaggregats, der bei der Durchführung des Arbeitsauftrags verschleißbedingt verursachten Kosten, der Verschleißursache, der zukünftigen Anbaustrategie auf der landwirtschaftlichen Fläche, der zukünftigen Erntestrategie für die landwirtschaftliche Fläche und/oder des Wartungsintervalls des mindestens einen Arbeitsaggregats.

Gemäß einer vorteilhaften Weiterbildung der Erfindung ist vorgesehen, dass die Datenbank, die Verarbeitungseinrichtung und/oder die Anzeigeeinrichtung jeweils als externe Einrichtung oder als eine der Erntemaschine zugeordnete Einrichtung ausgebildet ist.

Vorzugsweise sind die Datenbank und die Verarbeitungseinrichtung als externe Einrichtungen ausgebildet, wobei die Datenbank und die Verarbeitungseinrichtung gemeinsam ein Verwaltungssystem ausbilden.

Weiter vorzugsweise ist das Verwaltungssystem einer Entität zugeordnet, die unabhängig von einer Person ist, der die Erntemaschine und/oder die landwirtschaftliche Fläche, auf der der Arbeitsauftrag durchgeführt wird, zugeordnet ist, wobei eine Nutzung des Verwaltungssystems zur Durchführung der Verfahrensschritte von der Entität bei einer vorliegenden Berechtigung freigeschaltet wird.

Wahlweise kann das Verwaltungssystem demnach der Person, beispielsweise dem Landwirt oder dem Lohnunternehmer, der die Erntemaschine und/oder die landwirtschaftliche Fläche, auf der der Arbeitsauftrag durchgeführt wird, oder einem Dienstleister (Entität) zugeordnet sein. Die Person, beispielsweise der Landwirt oder Lohnunternehmer, kann sich die Nutzung des Verwaltungssystems zur Durchführung des erfindungsgemäßen Verfahrens durch die Bezahlung einer Gebühr von dem Dienstleister freischalten lassen (d.h., als eine As-a-Service-Funktionalität).

Gemäß einer vorteilhaften Weiterbildung der Erfindung ist vorgesehen, dass die mindestens eine Sensoreinrichtung eine induktiv arbeitende Sensoreinrichtung und das mindestens eine Arbeitsaggregat eine mit einer Vielzahl an Häckselmessern versehene Messertrommel eines Häckselwerks eines Feldhäckslers ist, wobei, mittels der Verarbeitungseinrichtung, der ortsbezogene Verschleißzustand eines oder mehrerer Häckselmesser der Messertrommel bestimmt wird.

Die erfindungsgemäße Aufgabe wird ferner durch eine selbstfahrende landwirtschaftliche Erntemaschine, insbesondere einen Feldhäcksler, gemäß dem unabhängigen Patentanspruch 15 gelöst.

Die vorliegende Erfindung wird nachstehend anhand der in den Figuren abgebildeten Ausführungsformen näher beschrieben.

Es zeigen:
- FIG. 1: eine schematische und exemplarische Darstellung einer erfindungsgemäßen selbstfahrenden landwirtschaftlichen Erntemaschine in Gestalt eines Feldhäckslers;
- FIG. 2: eine schematische und exemplarische Darstellung von Einrichtungen zur Durchführung des erfindungsgemäßen Verfahrens; und
- FIG. 3: eine schematische und exemplarische Darstellung einer erfindungsgemäßen Anzeigeeinrichtung zur Darstellung von bei der Durchführung des erfindungsgemäßen Verfahrens erhaltenen Informationen.

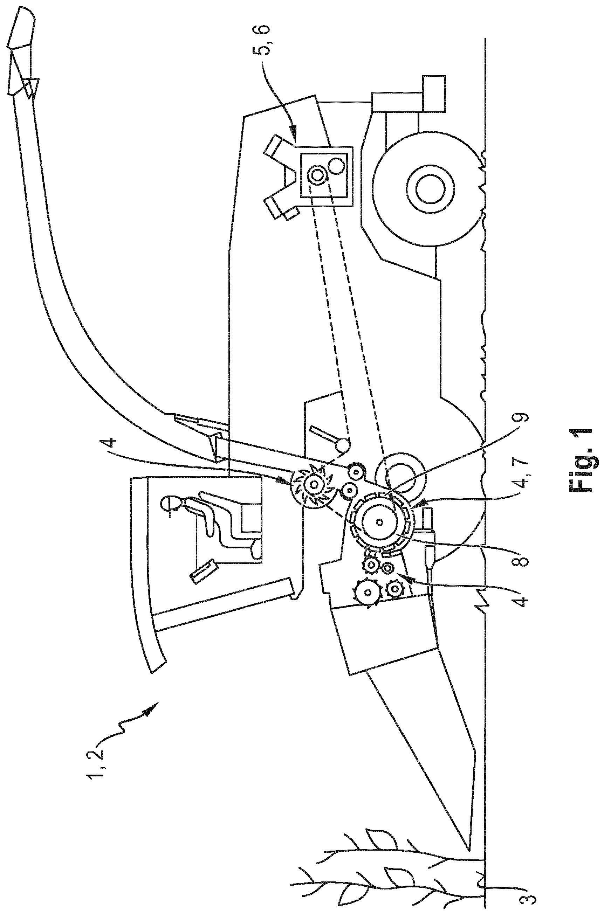

FIG. 1 zeigt eine schematische und exemplarische Darstellung einer erfindungsgemäßen selbstfahrenden landwirtschaftlichen Erntemaschine 1 in Gestalt eines Feldhäckslers 2, die einen Arbeitsauftrag bzw. Ernteauftrag auf einer landwirtschaftlichen Fläche 3 durchführt. Die Karosserie des Feldhäckslers 2 ist in ihrem Vorderteil, unterhalb einer Fahrerkabine, aufgeschnitten dargestellt, um interne, Erntegut verarbeitende Arbeitsaggregate 4 des Feldhäckslers 2 zeigen zu können, die mit einem ebenfalls in FIG. 1 dargestellten dem Antrieb dienenden Arbeitsaggregat 5, in Gestalt eines Antriebsmotors 6, verbunden sind. Eins dieser Erntegut verarbeitenden Arbeitsaggregate 4 ist ein sogenanntes Häckselwerk 7 mit einer Messertrommel 8, die wiederum mit einer Vielzahl entlang ihres Umfangs verteilt angeordneten Häckselmessern 9 versehen ist. Die vorliegende Erfindung ist nicht auf einen Feldhäcksler 2 beschränkt, sondern auch für andere selbstfahrende Erntemaschinen 1, beispielsweise einen Mähdrescher, gleichermaßen geeignet. Hier und vorzugsweise handelt es sich allerdings um einen Feldhäcksler 2.

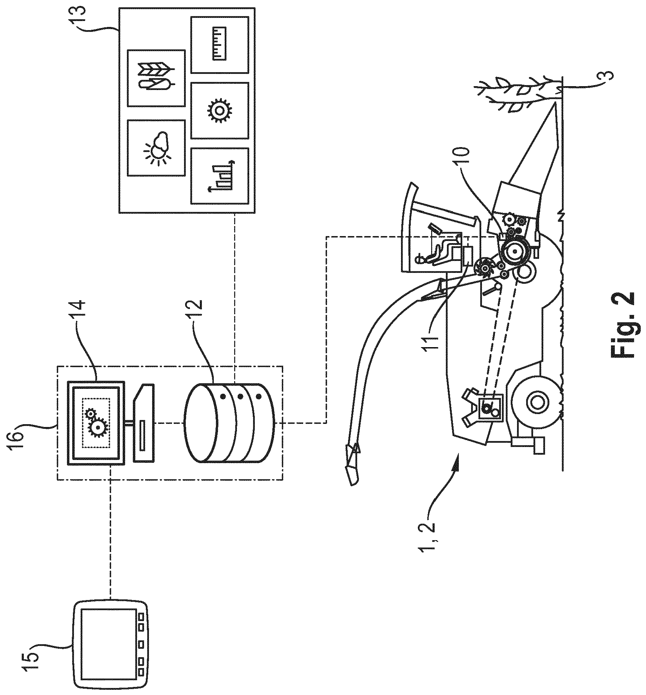

Die erfindungsgemäße Erntemaschine 1 umfasst weiterhin mindestens eine Sensoreinrichtung 10 sowie eine Positionsbestimmungseinrichtung 11, wie in FIG. 2 dargestellt. Die Sensoreinrichtung 10 und die Positionsbestimmungseinrichtung 11 sind jeweils mit einer Datenbank 12 verbunden bzw. kommunizieren mit der Datenbank 12 zur Übertragung von Daten, so dass die von der Sensoreinrichtung 10 und der Positionsbestimmungseinrichtung 11 ermittelten Daten an die Datenbank 12 übermittelt und in dieser hinterlegt werden können. Die Datenbank 12 kann als cloudbasierte Datenbank ausgebildet sein. Weiterhin ist es möglich, dass die Datenbank 12 zentral oder dezentral, beispielsweise als Blockchain-Datenbank ausgebildet ist. In der Datenbank 12 können neben den Daten der Sensoreinrichtung 10 und der Positionsbestimmungseinrichtung 11 noch sogenannte Referenzdaten 13 hinterlegt sein bzw. werden. Die Datenbank 12 ist weiterhin mit einer Verarbeitungseinrichtung 14 verbunden bzw. kommuniziert mit der Verarbeitungseinrichtung 14 zur Übertragung von Daten. Mit der Verarbeitungseinrichtung 14 kann wiederum eine Anzeigeeinrichtung 15 verbunden sein bzw. die Verarbeitungseinrichtung 14 kann mit der Anzeigeeinrichtung 15 zur Übertragung von Daten kommunizieren. Die Kommunikation der verschiedenen Einrichtungen 10, 11, 12, 14, 15 miteinander zur Übertragung von Daten kann wahlweise kabelgebunden und/oder drahtlos erfolgen.

Bezugnehmend auf die zuvor beschriebenen Einrichtungen 10, 11, 12, 14, 15 wird nachfolgend das erfindungsgemäße Verfahren zum Bestimmen eines Verschleißzustands mindestens eines Arbeitsaggregats 4, 5 der Erntemaschine 1 im Detail beschrieben.

Wie bereits eingangs beschrieben, kann der Verschleiß eines Arbeitsaggregats 4, 5 einer Erntemaschine 1 nicht nur in einem Defekt bzw. Ausfall des Arbeitsaggregats 4, 5 bzw. der Erntemaschine 1 resultieren, sondern auch für die Abrechnung von Arbeitsaufträgen, die Planung einer Anbau- und/oder Erntestrategie, die Wartung des Arbeitsaggregats bzw. der Erntemaschine und/oder für eine Nachweispflicht relevant sein bzw. werden.

Dies vorangestellt sieht das erfindungsgemäße Verfahren nun vor, dass zunächst mittels der mindestens einen Sensoreinrichtung 10 der Erntemaschine 1 zu einer Vielzahl an Zeitpunkten t_{1,...,n} vor, während und/oder nach der Durchführung eines Arbeitsauftrags auf der landwirtschaftlichen Fläche 3 durch die Erntemaschine 1 Betriebsdaten des mindestens einen Arbeitsaggregats 4, 5 ermittelt werden. Diese Betriebsdaten werden von der Sensoreinrichtung 10 an die Datenbank 12 übermittelt, wobei eine Übermittlung vorzugsweise zu jedem Zeitpunkt t der Vielzahl an Zeitpunkten t_{1,...,n}, an dem die Betriebsdaten von der Sensoreinrichtung 10 ermittelt wurden, vorgenommen wird. Alternativ können die Betriebsdaten auch gesammelt nach Abschluss des Arbeitsauftrags an die Datenbank 12 übermittelt werden.

Gleichzeitig wird mittels der Positionsbestimmungseinrichtung 11 der Erntemaschine 1 zu der Vielzahl an Zeitpunkten t_{1,...,n} vor, während und/oder nach der Durchführung des Arbeitsauftrags auf der landwirtschaftlichen Fläche 3 durch die Erntemaschine 1 Positionsdaten der Erntemaschine 1 ermittelt. Diese Positionsdaten werden von der Positionsbestimmungseinrichtung 11 an die Datenbank 12 übermittelt, wobei eine Übermittlung vorzugsweise zu jedem Zeitpunkt t der Vielzahl an Zeitpunkten t_{1,...,n} , an dem die Positionsdaten von der Positionsbestimmungseinrichtung 11 ermittelt wurden, vorgenommen wird. Alternativ können die Positionsdaten auch gesammelt nach Abschluss des Arbeitsauftrags an die Datenbank 12 übermittelt werden.

Sowohl die Betriebsdaten als auch die Positionsdaten zu jedem Zeitpunkt t der Vielzahl an Zeitpunkten t_{1,..,n} werden nach ihrer Übermittlung an die Datenbank 12 in dieser hinterlegt. Die Betriebsdaten und Positionsdaten werden dabei einander zugeordnet in der Datenbank 12 hinterlegt. Die Zuordnung von Betriebsdaten und Positionsdaten kann dadurch erfolgen, dass jeder Datenwert mit einem Zeitstempel versehen ist, der den Zeitpunkt t der Vielzahl an Zeitpunkten t_{1,...,n} repräsentiert. Mittels der Verarbeitungseinrichtung 14 werden die in der Datenbank 12 hinterlegten Betriebsdaten und Positionsdaten in einer Analyseroutine derart verarbeitet, dass ein ortsreferenzierter Verschleißzustand des Arbeitsaggregats 4, 5 zu jedem Zeitpunkt t der Vielzahl an Zeitpunkten t_{1,...,n} bestimmt wird. Mit anderen Worten, mittels der Verarbeitungseinrichtung 14 wird ein Verschleißzustand des Arbeitsaggregats 4, 5 zu jedem Zeitpunkt t der Vielzahl an Zeitpunkten t_{1,...,n} bestimmt, wobei der bestimmte Verschleißzustand zu einem Zeitpunkt t einen eindeutigen Bezug zu einem Ort bzw. einer Position der Erntemaschine 1 auf der landwirtschaftlichen Fläche 3 zu diesem Zeitpunkt t, also eine eindeutige Ortsreferenz, umfasst.

Das Bestimmen des Verschleißzustands durch die Verarbeitungseinrichtung 14 erfolgt durch ein Verarbeiten der ermittelten Daten in einer Analyseroutine. Die Analyseroutine wendet zum Bestimmen des ortsreferenzierten Verschleißzustands des Arbeitsaggregats 4, 5 einen Analysealgorithmus an, mittels dem die von der Sensoreinrichtung 10 ermittelten Betriebsdaten des Arbeitsaggregats 4, 5 und die von der Positionsbestimmungseinrichtung 11 ermittelten Positionsdaten der Erntemaschine 1 derart verarbeitet werden, dass der Verschleißzustand des Arbeitsaggregats 4, 5 bestimmt wird. Der Verschleißzustand des Arbeitsaggregats 4, 5 kann mittels der Verarbeitungseinrichtung 14 beispielsweise in % Verschleiß bestimmt werden, wobei 0 % Verschleiß keinen Verschleiß des Arbeitsaggregats 4, 5 und 100 % Verschleiß das Erreichen der maximalen Lebensdauer des Arbeitsaggregats 4, 5 definiert. Die Verarbeitungseinrichtung 14 ist ferner dazu ausgebildet, einen betriebskritischen Verschleißzustand des Arbeitsaggregats 4, 5 zu detektieren, der beispielsweise ab einem Wert größer 60 % Verschleiß vorliegen könnte, in dem der bestimmte ortsreferenzierte Verschleißzustand mit einem in der Datenbank 12 hinterlegtem Grenzwert, der einen betriebskritischen Verschleißzustand definiert, verglichen wird.

Vorzugsweise werden neben den von der Sensoreinrichtung 10 ermittelten Betriebsdaten und den von der Positionsbestimmungeinrichtung 11 ermittelten Positionsdaten die zuvor erwähnten in der Datenbank 12 hinterlegten Referenzdaten 13 als Eingangsgröße des Analysealgorithmus verwendet. Als Referenzdaten 13 können Kennfelddaten des Arbeitsaggregats 4, 5 und/oder der Erntemaschine 1, historische Daten zu Verschleißzuständen des Arbeitsaggregats 4, 5, Geometriedaten des Arbeitsaggregats 4, 5 und/oder der Erntemaschine 1, Lastkollektive des Arbeitsaggregats 4, 5 und/oder der Erntemaschine 1, Wetterdaten und/oder agronomische Daten der landwirtschaftlichen Fläche 3, insbesondere Bodenplatten, Bestandsdaten, Ertragsdaten und/oder Flächendaten, dienen.

Der in der Analyseroutine durch die Verarbeitungseinrichtung 14 verwendete Analysealgorithmus kann ein lernfähiger Analysealgorithmus sein, also ein Analysealgorithmus, der auf einer künstlichen Intelligenz, vorzugsweise einem künstlichen neuronalen Netz, basiert. Der lernfähige Analysealgorithmus wird vor der Durchführung einer ersten Bestimmung eines ortsreferenzierten Verschleißzustands mittels eines Initialdatensatzes, der mittels manueller Annotation vorgenommene Zuordnungen von verschiedenen Betriebsparametern von Arbeitsaggregaten 4, 5 und entsprechenden Verschleißzuständen der Arbeitsaggregate 4, 5 definiert, trainiert. Die während der Durchführung des erfindungsgemäßen Verfahrens ermittelten Daten und bestimmten Verschleißzustände können zum weiteren Trainieren des Analysealgorithmus verwendet werden.

Mittels der Verarbeitungseinrichtung 14 kann weiterhin in Abhängigkeit des ortsreferenzierten Verschleißzustands des Arbeitsaggregats 4, 5 die bei der Durchführung des Arbeitsauftrags verschleißbedingt verursachten Kosten, eine Ursache für den Verschleiß, eine zukünftige Anbaustrategie auf der landwirtschaftlichen Fläche 3, eine zukünftige Erntestrategie für die landwirtschaftliche Fläche 3 und/oder ein Wartungsintervall des Arbeitsaggregats 4, 5 bestimmt werden.

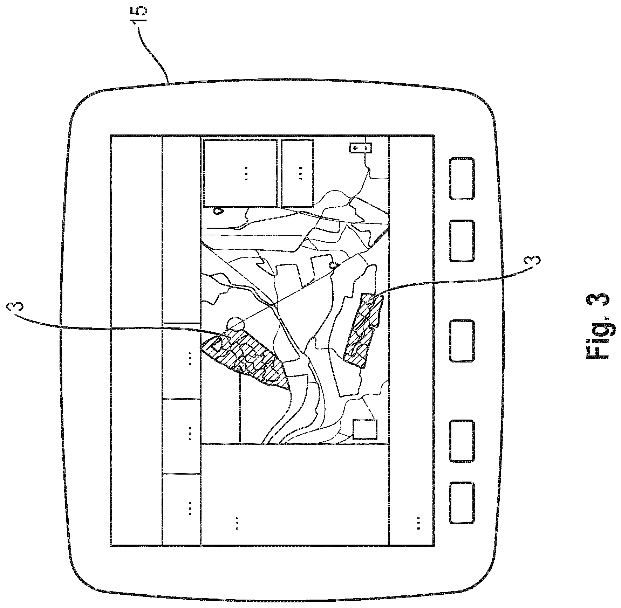

Die bestimmten ortsreferenzierten Verschleißzustände des Arbeitsaggregats 4, 5 zu der Vielzahl an Zeitpunkten t_{1,...,n} vor, während und/oder nach der Durchführung des Arbeitsauftrags durch die Erntemaschine 1, ein möglicher kritischer Verschleißzustand des Arbeitsaggregats 4, 5, die bei der Durchführung des Arbeitsauftrags verschleißbedingt verursachten Kosten, eine Ursache für den Verschleiß, eine zukünftige Anbaustrategie auf der landwirtschaftlichen Fläche 3, eine zukünftige Erntestrategie für die landwirtschaftliche Fläche 3 und/oder ein Wartungsintervall des Arbeitsaggregats 4, 5 können mittels der Anzeigeeinrichtung 15 angezeigt bzw. dargestellt werden. Die Anzeige bzw. Darstellung dieser Informationen auf der Anzeigeeinrichtung 15 kann wahlweise textbasiert und/oder grafisch, insbesondere durch grafische Elemente und/oder durch farbliche Hervorhebung, erfolgen. Neben der Anzeige bzw. Darstellung der bestimmten ortsreferenzierten Verschleißzustände des Arbeitsaggregats 4, 5 kann auch ein Verlauf dieser ortsreferenzierten Verschleißzustände des Arbeitsaggregats 4, 5, vorzugsweise grafisch, dargestellt werden. Weiterhin ist es möglich, dass die bestimmten ortsreferenzierten Verschleißzustände des mindestens einen Arbeitsaggregats 4, 5 mittels der Anzeigeeinrichtung 15 kartiert dargestellt bzw. angezeigt werden. Mit anderen Worten, mittels der Anzeigenrichtung 15 wird eine Karte der landwirtschaftlichen Fläche 3 dargestellt bzw. angezeigt, auf der die bestimmten Verschleißzustände des Arbeitsaggregats 4, 5 jeweils einem Flächenbereich der landwirtschaftlichen Fläche 3 zugeordnet sind. FIG. 3 zeigt eine solche mittels der Anzeigeeinrichtung 15 dargestellte Kartierung der bestimmten Verschleißzustände. Die in FIG. 3 mittels der Anzeigeeinrichtung 15 dargestellte Karte zeigt zwei landwirtschaftliche Flächen 3, wobei jede der beiden landwirtschaftlichen Flächen 3 in mehrere Flächenbereiche aufgeteilt ist, deren Begrenzungen durch feine Linien auf der Karte definiert sind. Die Schraffierung oder auch eine Farbgebung jedes Flächenbereichs gibt den bei der Bearbeitung dieses Flächenbereichs an dem Arbeitsaggregat 4, 5 verursachten Verschleiß bzw. eine Änderung des Verschleißzustands, die durch die Bearbeitung dieses Flächenbereichs entstanden ist, wieder. Basierend hierauf, kann die Person, also beispielsweise ein Landwirt oder Lohnunternehmer, dem die Karte mittels der Anzeigeeinrichtung 15 angezeigt wird, unmittelbar den durchgeführten Arbeitsauftrag auf der entsprechenden landwirtschaftlichen Fläche 3 beurteilten. In an den Anzeigebereich der Karte angrenzenden Anzeigebereichen können weitere Informationen dargestellt werden, wie beispielsweise die bei der Durchführung des Arbeitsauftrags verschleißbedingt verursachten Kosten, eine Ursache für den Verschleiß, eine zukünftige Anbaustrategie auf der entsprechenden landwirtschaftlichen Fläche 3, eine zukünftige Erntestrategie für die entsprechende landwirtschaftliche Fläche 3, ein Wartungsintervall des Arbeitsaggregats 4, 5 und/oder Informationen zu dem Arbeitsaggregat 4, 5 der Erntemaschine 1, dessen Verschleißzustand betrachtet wird.

Weiterhin kann anhand der durch die Verarbeitungseinrichtung 14 durchgeführten Bestimmung eines ortsreferenzierten Verschleißzustands des Arbeitsaggregats 4, 5 zu der Vielzahl an Zeitpunkten t_{1,...,n} eine ortsreferenzierte Verschleißkennzahl von der Verarbeitungseinrichtung 14 ermittelt werden. Hierzu wird ein zu einem Zeitpunkt t₁ unmittelbar vor der Durchführung des Arbeitsauftrags durch die Erntemaschine 1 mittels der Verarbeitungseinrichtung 14 bestimmter ortsreferenzierter Verschleißzustand des Arbeitsaggregats 4, 5 mit einem zu einem Zeitpunkt tₙ unmittelbar nach der Durchführung des Arbeitsauftrags durch die Erntemaschine 1 mittels der Verarbeitungseinrichtung 14 bestimmter ortsreferenzierter Verschleißzustand des Arbeitsaggregats 4, 5 verglichen und basierend auf diesem Vergleich die ortsreferenzierte Verschleißkennzahl für das Arbeitsaggregat 4, 5 mittels der Verarbeitungseinrichtung 14 bestimmt. Die ortsreferenzierte Verschleißkennzahl repräsentiert den Verschleiß des Arbeitsaggregats 4, 5, der bei der Durchführung des Arbeitsauftrags durch die Erntemaschine 1 auf der landwirtschaftlichen Fläche 3 entstanden ist. Die mittels der Verarbeitungseinrichtung 14 ermittelte ortsreferenzierte Verschleißkennzahl wird in der Datenbank 12 hinterlegt.

Die von der Verarbeitungseinrichtung 14 bestimmte ortsreferenzierte Verschleißkennzahl für das Arbeitsaggregat 4, 5 kann dazu herangezogen bzw. verarbeitet werden, die bei der Durchführung des Arbeitsauftrags durch die Erntemaschine 1 verschleißbedingt verursachten Kosten zu bestimmen. So kann beispielsweise anhand der ortsreferenzierten Verschleißkennzahl ermittelt werden, welche Kosten bei der Durchführung des Arbeitsauftrags durch die Erntemaschine 1 wann und wo auf der landwirtschaftlichen Fläche 3 entstanden sind. Diese Kosten können der Ermittlung der für die Durchführung des Arbeitsauftrags durch die Erntemaschine 1 entstandenen Betriebskosten zugrunde gelegt werden.

Ergänzend oder alternativ hierzu kann die von der Verarbeitungseinrichtung 14 bestimmte ortsreferenzierte Verschleißkennzahl für das Arbeitsaggregat 4, 5 dazu herangezogen bzw. verarbeitet werden, ein Wartungsintervall für das Arbeitsaggregat 4, 5 zu bestimmen, wodurch die Wartung des Arbeitsaggregats 4, 5 bzw. der Erntemaschine 1 auf effiziente Art und Weise geplant werden kann.

Mittels der Verarbeitungseinrichtung 14 kann nicht nur der ortsreferenzierte Verschleißzustand eines Arbeitsaggregat 4, 5 der Erntemaschine 1 bestimmt werden. Vielmehr kann zeitgleich der Verschleißzustand einer Vielzahl an Arbeitsaggregaten 4, 5 der Erntemaschine 1 bestimmt werden. Hierzu werden mittels einer Vielzahl an Sensoreinrichtungen 10 der Erntemaschine 1 Betriebsdaten einer Vielzahl an Arbeitsaggregaten 4, 5 der Erntemaschine 1 zu der Vielzahl an Zeitpunkten t_{1,...,n} vor, während und/oder nach der Durchführung des Arbeitsauftrags durch die Erntemaschine 1 bestimmt. Anhand dieser Vielzahl an Betriebsdaten und den Positionsdaten, die mittels der Positionsbestimmungseinrichtung 11 zu der Vielzahl an Zeitpunkten t_{1,...,n} vor, während und/oder nach der Durchführung des Arbeitsauftrags durch die Erntemaschine 1 bestimmt wurden, wird mittels der Verarbeitungseinrichtung 14 ein ortsreferenzierter Verschleißzustand jedes Arbeitsaggregats 4, 5 der Vielzahl an Arbeitsaggregaten 4, 5 zu dem entsprechenden Zeitpunkt t bestimmt. Anhand der ortsreferenzierten Verschleißzustände jedes Arbeitsaggregats 4, 5 der Vielzahl an Arbeitsaggregaten 4, 5 kann mittels der Verarbeitungseinrichtung 14 weiterhin ein Verschleißzustand der Erntemaschine 1 insgesamt bestimmt werden.

Die Verarbeitungseinrichtung 14, die Datenbank 12 und/oder die Anzeigeeinrichtung 15 können jeweils als eine externe Einrichtung oder als eine der Erntemaschine 1 zugeordnete Einrichtung ausgebildet sein. Sofern die Verarbeitungseinrichtung 14 und die Datenbank 12 als externe Einrichtungen ausgebildet sind, können sie gemeinsam ein Verwaltungssystem 16 ausbilden. Ein solches Verwaltungssystem 16 kann einer Entität, beispielsweise einem Dienstleister, zugeordnet sein, die unabhängig von einer Person ist, beispielsweise einem Landwirt oder einem Lohnunternehmer, der die Erntemaschine 1 oder die landwirtschaftliche Fläche 3, auf der der Arbeitsauftrag durchgeführt wird, zugeordnet ist. Eine Nutzung des Verwaltungssystems 16 zur Durchführung des Verfahrens kann dabei von der Entität, also dem Dienstleister, bei einer vorliegenden Berechtigung freigeschaltet werden. Insbesondere kann sich die Person die Nutzung des Verwaltungssystems 16 zur Durchführung des erfindungsgemäßen Verfahrens durch die Bezahlung einer Gebühr von dem Dienstleister freischalten lassen. Die Durchführung des erfindungsgemäßen Verfahrens wird dann als kostenpflichtige externe Dienstleistung angeboten, d.h. als eine As-a-Service-Funktionalität.

Es ist auch möglich, dass die Erntemaschine 1 basierend auf dem bestimmten ortsabhängigen Verschleißzustand zu den Zeitpunkten t_{1,..,n} mittels der Verarbeitungseinrichtung 14 automatisch eine Anweisung den Betrieb der Erntemaschine 1 betreffend erzeugt. Beispielsweise wäre es möglich, dass die Verarbeitungseinrichtung 14 bei der Bestimmung eines kritischen Verschleißzustands des Arbeitsaggregats 4, 5 während der Durchführung des Arbeitsauftrags automatisch das Arbeitsaggregat 4, 5 stoppt bzw. abschaltet und/oder gewisse für die Durchführung des Arbeitsauftrags erforderliche Funktionen der Erntemaschine 1 abschaltet. Außerdem ist es möglich, dass die Erntemaschine 1 bei der Bestimmung eines kritischen Verschleißzustands des Arbeitsaggregats 4, 5 mittels der Verarbeitungseinrichtung 14 automatisch eine Wartung des Arbeitsaggregats 4, 5 beauftragt.

Vorzugsweise wird das Verfahren bei dem in den FIGs. dargestellten Feldhäcksler 2 durchgeführt. Die Sensoreinrichtung 10 ist dabei eine induktiv arbeitende Sensoreinrichtung 10, die im Bereich einer mit einer Vielzahl an Häckselmessern 9 versehenen Messertrommel 8 eines Häckselwerks 7 des Feldhäckslers 2 angeordnet ist. Mittels der Verarbeitungseinrichtung 14 wird dabei anhand der aufgenommenen Betriebsdaten der induktiv arbeitenden Sensoreinrichtung 10 und der Positionsdaten des Feldhäckslers 2 ein ortsbezogener Verschleißzustand eines oder mehrerer Häckselmesser 9 der Messertrommel 8 zu jedem Zeitpunkt t der Vielzahl an Zeitpunkten t_{1,...,n} bestimmt.

Abschließend sei angemerkt, dass die vorstehend beschriebenen Ausführungsformen lediglich zur Beschreibung der beanspruchten Lehre dienen, diese jedoch keinesfalls als einschränkend oder erschöpfend anzusehen sind.

### Bezugszeichenliste

- 1: Erntemaschine
- 2: Feldhäcksler
- 3: Landwirtschaftliche Fläche
- 4: Arbeitsaggregat
- 5: Arbeitsaggregat
- 6: Antriebsmotor
- 7: Häckselwerk
- 8: Messertrommel
- 9: Häckselmesser
- 10: Sensoreinrichtung
- 11: Positionsbestimmungseinrichtung
- 12: Datenbank
- 13: Referenzdaten
- 14: Verarbeitungseinrichtung
- 15: Anzeigeeinrichtung
- 16: Verwaltungssystem

## Patentansprüche

1. Verfahren zum Bestimmen eines Verschleißzustands mindestens eines Arbeitsaggregats (4, 5) einer selbstfahrenden landwirtschaftlichen Erntemaschine (1), insbesondere eines Feldhäckslers (2), die folgenden Verfahrensschritte umfassend:
- Mittels mindestens einer Sensoreinrichtung (10) der Erntemaschine (1), Ermitteln von Betriebsdaten des mindestens einen Arbeitsaggregats (4, 5) zu einer Vielzahl an Zeitpunkten (t_{1,...,n}) vor, während und/oder nach einer Durchführung eines Arbeitsauftrags auf einer landwirtschaftlichen Fläche (3) durch die Erntemaschine (1);
- Mittels einer Positionsbestimmungseinrichtung (11) der Erntemaschine (1), Ermitteln von Positionsdaten der Erntemaschine (1) auf der landwirtschaftlichen Fläche (3) zu der Vielzahl an Zeitpunkten (t_{1,...,n}) vor, während und/oder nach der Durchführung des Arbeitsauftrags durch die Erntemaschine (1);
**gekennzeichnet durch die Verfahrensschritte:**
- Übermitteln der Betriebsdaten und Positionsdaten an eine Datenbank (12), wobei die Betriebsdaten und die Positionsdaten einander zugeordnet in der Datenbank (12) hinterlegt werden, wobei die Sensoreinrichtung (10) und die Positionsbestimmungseinrichtung (11) jeweils mit der Datenbank (12) zur Übertragung von Daten kommunizieren;
- Mittels einer Verarbeitungseinrichtung (14), Bestimmen eines ortsreferenzierten Verschleißzustands des mindestens einen Arbeitsaggregats (4, 5) zu jedem Zeitpunkt (t) der Vielzahl an Zeitpunkten (t_{1,...,n}) durch ein Verarbeiten der in der Datenbank (12) hinterlegten Betriebsdaten und Positionsdaten in einer Analyseroutine, wobei die Verarbeitungseinrichtung (14) mit der Datenbank (12) zur Übertragung von Daten kommuniziert.

2. Verfahren nach Anspruch 1, **dadurch gekennzeichnet, dass,** mittels der Verarbeitungseinrichtung (14), in Abhängigkeit des ortsreferenzierten Verschleißzustands des mindestens einen Arbeitsaggregats (4, 5) bei der Durchführung des Arbeitsauftrags verschleißbedingt verursachte Kosten, eine Verschleißursache, eine zukünftige Anbaustrategie auf der landwirtschaftlichen Fläche (3), eine zukünftige Erntestrategie für die landwirtschaftliche Fläche (3) und/oder ein Wartungsintervall des mindestens einen Arbeitsaggregats (4, 5) bestimmt werden.

3. Verfahren nach Anspruch 1 oder 2, **dadurch gekennzeichnet, dass,** mittels der Verarbeitungseinrichtung (14), anhand eines zu einem Zeitpunkt (t₁) unmittelbar vor der Durchführung des Arbeitsauftrags bestimmten ortsreferenzierten Verschleißzustands des mindestens einen Arbeitsaggregats (4, 5) und eines zu einem Zeitpunkt (tₙ) unmittelbar nach der Durchführung des Arbeitsauftrags bestimmten ortsreferenzierten Verschleißzustands des mindestens einen Arbeitsaggregats (4, 5) eine ortsreferenzierte Verschleißkennzahl für das mindestens eine Arbeitsaggregat (4, 5) bestimmt wird.

4. Verfahren nach Anspruch 2 und 3, **dadurch gekennzeichnet, dass** anhand der ortsreferenzierten Verschleißkennzahl die bei der Durchführung des Arbeitsauftrags verschleißbedingt verursachten Kosten bestimmt werden.

5. Verfahren nach Anspruch 2 und 3 oder Anspruch 4, **dadurch gekennzeichnet, dass** anhand der ortsreferenzierten Verschleißkennzahl das Wartungsintervall für das mindestens eine Arbeitsaggregat (4, 5) bestimmt wird.

6. Verfahren einem der Ansprüche 1 bis 5, **dadurch gekennzeichnet, dass,** mittels einer mit der Verarbeitungseinrichtung (14) zur Übertragung von Daten kommunizierenden Anzeigeeinrichtung (15), der ortsreferenzierte Verschleißzustand des mindestens einen Arbeitsaggregats (4, 5), die bei der Durchführung des Arbeitsauftrags verschleißbedingt verursachten Kosten, die Verschleißursache, die zukünftige Anbaustrategie auf der landwirtschaftlichen Fläche (3), die zukünftige Erntestrategie für die landwirtschaftliche Fläche (3) und/oder das Wartungsintervall des mindestens einen Arbeitsaggregats (4, 5) angezeigt wird.

7. Verfahren nach Anspruch 6, **dadurch gekennzeichnet, dass,** mittels der Anzeigeeinrichtung (15), ein Verlauf des ortsreferenzierten Verschleißzustands des mindestens einen Arbeitsaggregats (4, 5) und/oder der ortsreferenzierte Verschleißzustand des mindestens einen Arbeitsaggregats (4, 5) kartiert angezeigt wird.

8. Verfahren nach einem der Ansprüche 1 bis 7, **dadurch gekennzeichnet, dass,** mittels mehrerer Sensoreinrichtungen (10), gleichzeitig Betriebsdaten einer Vielzahl an Arbeitsaggregaten (4, 5) der Erntemaschine (1) zu der Vielzahl an Zeitpunkten (t_{1,..,n}) vor, während und/oder nach der Durchführung des Arbeitsauftrags bestimmt werden, wobei, mittels der Verarbeitungseinrichtung (14), gleichzeitig der ortsreferenzierte Verschleißzustand der Vielzahl an Arbeitsaggregaten (4, 5) bestimmt wird, wobei, vorzugsweise, anhand des ortsreferenzierten Verschleißzustands der Vielzahl an Arbeitsaggregaten (4, 5) ein Verschleißzustand der Erntemaschine (1) bestimmt wird.

9. Verfahren nach einem der Ansprüche 1 bis 8, **dadurch gekennzeichnet, dass** die Bestimmung des ortsreferenzierten Verschleißzustands des mindestens einen Arbeitsaggregats (4, 5), der bei der Durchführung des Arbeitsauftrags verschleißbedingt verursachten Kosten, der Verschleißursache, der zukünftigen Anbaustrategie auf der landwirtschaftlichen Fläche (3), der zukünftigen Erntestrategie für die landwirtschaftliche Fläche (3) und/oder des Wartungsintervalls des mindestens einen Arbeitsaggregats (4, 5) unter Berücksichtigung von Referenzdaten (13) erfolgt.

10. Verfahren nach Anspruch 9, **dadurch gekennzeichnet, dass** die Referenzdaten (13) in der Datenbank hinterlegte Kennfelddaten des mindestens einen Arbeitsaggregats (4, 5) und/oder der Erntemaschine (1), historische Daten zu Verschleißzuständen des mindestens einen Arbeitsaggregats (4, 5), Geometriedaten des mindestens einen Arbeitsaggregats (4, 5) und/oder der Erntemaschine (1), Lastkollektive des mindestens einen Arbeitsaggregats (4, 5) und/oder der Erntemaschine (1), Wetterdaten und/oder agronomische Daten der landwirtschaftlichen Fläche (3), insbesondere Bodendaten, Bestandsdaten, Ertragsdaten und/oder Flächendaten, umfassen.

11. Verfahren nach einem der Ansprüche 1 bis 10, **dadurch gekennzeichnet, dass** die Datenbank (12), die Verarbeitungseinrichtung (14) und/oder die Anzeigeeinrichtung (15) jeweils als externe Einrichtung oder als eine der Erntemaschine (1) zugeordnete Einrichtung ausgebildet ist.

12. Verfahren nach Anspruch 11, **dadurch gekennzeichnet, dass** die Datenbank (12) und die Verarbeitungseinrichtung (14) als externe Einrichtungen ausgebildet sind und gemeinsam ein Verwaltungssystem (16) ausbilden.

13. Verfahren nach Anspruch 12, **dadurch gekennzeichnet, dass** das Verwaltungssystem (16) einer Entität zugeordnet ist, die unabhängig von einer Person ist, der die Erntemaschine (1) und/oder die landwirtschaftliche Fläche (3), auf der der Arbeitsauftrag durchführt wird, zugeordnet ist, wobei eine Nutzung des Verwaltungssystems (16) zur Durchführung der Verfahrensschritte von der Entität bei einer vorliegenden Berechtigung freigeschaltet wird.

14. Verfahren nach einem der Ansprüche 1 bis 13, **dadurch gekennzeichnet, dass** die mindestens eine Sensoreinrichtung (10) eine induktiv arbeitende Sensoreinrichtung (10) und das mindestens eine Arbeitsaggregat (4) eine mit einer Vielzahl an Häckselmessern (9) versehene Messertrommel (8) eines Häckselwerks (7) eines Feldhäckslers (2) ist, wobei, mittels der Verarbeitungseinrichtung (14), der ortsbezogene Verschleißzustand eines oder mehrerer Häckselmesser (9) der Messertrommel (8) bestimmt wird.

15. Selbstfahrende landwirtschaftliche Erntemaschine (1), insbesondere Feldhäcksler (2), umfassend
mindestens ein Arbeitsaggregat (4, 5),
mindestens eine Sensoreinrichtung (10),
eine Positionsbestimmungseinrichtung (11),
eine Datenbank (12),
eine Verarbeitungseinrichtung (14), und
eine Anzeigeeinrichtung (15),
die so angepasst sind, dass sie die Schritte des Verfahrens nach einem der Ansprüche 1 bis 14 ausführen.

## Claims

1. Method for determining a wear state of at least one working assembly (4, 5) of a self-propelled agricultural harvester (1), in particular a forage harvester (2), comprising the following method steps:
- ascertaining, by means of at least one sensor device (10) of the harvester (1), operating data of the at least one working assembly (4, 5) at a multiplicity of times (t_{1,...,n}) before, during and/or after carrying out of a work assignment on an agricultural surface (3) by the harvester (1);
- ascertaining, by means of a position-determining device (11) of the harvester (1), position data of the harvester (1) on the agricultural surface (3) at the multiplicity of times (t_{1,...,n}) before, during and/or after the carrying out of the work assignment by the harvester (1); **characterized by** the method steps of:
- transmitting the operating data and position data to a database (12), wherein the operating data and the position data are stored in the database (12) in a manner assigned to one another, wherein the sensor device (10) and the position-determining device (11) each communicate with the database (12) for transfer of data;
- determining, by means of a processing device (14), a location-referenced wear state of the at least one working assembly (4, 5) at each time (t) of the multiplicity of times (t_{1,...,n}) by processing the operating data and position data stored in the database (12) in an analysis routine, wherein the processing device (14) communicates with the database (12) for transfer of data.

2. Method according to Claim 1, **characterized in that**, by means of the processing device (14), costs incurred due to wear during the carrying out of the work assignment, a cause of wear, a future cultivation strategy on the agricultural surface (3), a future harvesting strategy for the agricultural surface (3) and/or a maintenance interval for the at least one working assembly (4, 5) are/is determined according to the location-referenced wear state of the at least one working assembly (4, 5).

3. Method according to Claim 1 or 2, **characterized in that**, by means of the processing device (14), a location-referenced wear characteristic number for the at least one working assembly (4, 5) is determined on the basis of a location-referenced wear state of the at least one working assembly (4, 5) determined at a time (t₁) immediately before the working assignment is carried out and a location-referenced wear state of the at least one working assembly (4, 5) determined at a time (tₙ) immediately after the work assignment has been carried out.

4. Method according to Claims 2 and 3, **characterized in that** the costs incurred due to wear during the carrying out of the work assignment are determined on the basis of the location-referenced wear characteristic number.

5. Method according to Claims 2 and 3 or Claim 4, **characterized in that** the maintenance interval for the at least one working assembly (4, 5) is determined on the basis of the location-referenced wear characteristic number.

6. Method according to one of Claims 1 to 5, **characterized in that**, by means of a display device (15) that communicates with the processing device (14) for transfer of data, the location-referenced wear state of the at least one working assembly (4, 5), the costs incurred due to wear during the carrying out of the work assignment, the cause of wear, the future cultivation strategy on the agricultural surface (3), the future harvesting strategy for the agricultural surface (3) and/or the maintenance interval for the at least one working assembly (4, 5) are/is indicated.

7. Method according to Claim 6, **characterized in that**, by means of the display device (15), progression of the location-referenced wear state of the at least one working assembly (4, 5) and/or the location-referenced wear state of the at least one working assembly (4, 5) are/is indicated in mapped form.

8. Method according to one of Claims 1 to 7, **characterized in that**, by means of multiple sensor devices (10), operating data of a multiplicity of working assemblies (4, 5) of the harvester (1) are determined simultaneously at the multiplicity of times (t_{1,..,n}) before, during and/or after the carrying out of the work assignment, wherein, by means of the processing device (14), the location-referenced wear states of the multiplicity of working assemblies (4, 5) are determined simultaneously, wherein preferably a wear state of the harvester (1) is determined on the basis of the location-referenced wear states of the multiplicity of working assemblies (4, 5).

9. Method according to one of Claims 1 to 8, **characterized in that** the determination of the location-referenced wear state of the at least one working assembly (4, 5), of the costs incurred due to wear during the carrying out of the work assignment, of the cause of wear, of the future cultivation strategy on the agricultural surface (3), of the future harvesting strategy for the agricultural surface (3) and/or of the maintenance interval for the at least one working assembly (4, 5) is realized with reference data (13) taken into account.

10. Method according to Claim 9, **characterized in that** the reference data (13) comprise database-stored characteristic-map data of the at least one working assembly (4, 5) and/or of the harvester (1), historical data concerning wear states of the at least one working assembly (4, 5), geometry data of the at least one working assembly (4, 5) and/or of the harvester (1), load collectives of the at least one working assembly (4, 5) and/or of the harvester (1), weather data and/or agronomic data of the agricultural surface (3), in particular soil data, crop data, yield data and/or surface data.

11. Method according to one of Claims 1 to 10, **characterized in that** the database (12), the processing device (14) and/or the display device (15) are each/is configured as an external device or as a device assigned to the harvester (1).

12. Method according to Claim 11, **characterized in that** the database (12) and the processing device (14) are configured as external devices and together form a management system (16).

13. Method according to Claim 12, **characterized in that** the management system (16) is assigned to an entity that is independent of a person to whom the harvester (1) and/or the agricultural surface (3) on which the work assignment is carried out is assigned, wherein a use of the management system (16) for carrying out the method steps is enabled by the entity where authorization exists.

14. Method according to one of Claims 1 to 13, **characterized in that** the at least one sensor device (10) is an inductively operating sensor device (10) and the at least one working assembly (4) is a blade drum (8) of a chopper mechanism (7) of a forage harvester (2) that is equipped with a multiplicity of chopper blades (9), wherein, by means of the processing device (14), the location-related wear state of one or more chopper blades (9) of the blade drum (8) is determined.

15. Self-propelled agricultural harvester (1), in particular forage harvester (2), comprising
at least one working assembly (4, 5),
at least one sensor device (10),
a position-determining device (11),
a database (12),
a processing device (14), and
a display device (15),
which are adapted in such a way as to carry out the steps of the method according to one of Claims 1 to 14.

## Revendications

1. Procédé de détermination d'un état d'usure d'au moins un organe de travail (4, 5) d'une machine de récolte agricole (1) automotrice, en particulier d'une récolteuse-hacheuse-chargeuse (2), comprenant les étapes de procédé suivantes :
- détermination, à l'aide d'au moins un dispositif capteur (10) de la machine de récolte (1), de données de fonctionnement de l'organe de travail (4, 5), au nombre d'au moins un, à un grand nombre d'instants (t₁...,ₙ) avant, pendant et/ou après l'exécution d'une tâche sur une surface agricole (3) par la machine de récolte (1) ;
- détermination, à l'aide d'un dispositif de localisation (11) de la machine de récolte (1), de données de position de la machine de récolte (1) sur la surface agricole (3), pour le grand nombre d'instants (t₁...,ₙ) avant, pendant et/ou après l'exécution de la tâche par la machine de récolte (1) ;
**caractérisé en ce qu'**il comporte les étapes de procédé suivantes :
- transmission des données de fonctionnement et des données de position à une base de données (12), les données de fonctionnement et les données de position étant enregistrées dans la base de données (12) en étant associées les unes aux autres, le dispositif capteur (10) et le dispositif de localisation (11) communiquant chacun avec la base de données (12) en vue de la transmission de données ;
- détermination, à l'aide d'un dispositif de traitement (14), d'un état d'usure à référence locale de l'organe de travail (4, 5), au nombre d'au moins un, à chaque instant (t) de la pluralité d'instants (t₁...,ₙ), par un traitement des données de fonctionnement et des données de position enregistrées dans la base de données (12), dans une routine d'analyse, le dispositif de traitement (14) communiquant avec la base de données (12) en vue de la transmission de données.

2. Procédé selon la revendication 1, **caractérisé en ce que** l'on détermine à l'aide du dispositif de traitement (14), en fonction de l'état d'usure à référence locale de l'organe de travail (4, 5), au nombre d'au moins un, lors de l'exécution de la tâche, des coûts engendrés suite à l'usure, une cause d'usure, une stratégie de culture future sur la surface agricole (3), une stratégie de récolte future pour la surface agricole (3) et/ou un intervalle d'entretien de l'organe de travail (4, 5), au nombre d'au moins un.

3. Procédé selon la revendication 1 ou 2, **caractérisé en ce que** l'on détermine à l'aide du dispositif de traitement (14), sur la base d'un état d'usure à référence locale de l'organe de travail (4, 5), au nombre d'au moins un, déterminé à un instant (t₁) immédiatement avant l'exécution de la tâche, et d'un état d'usure à référence locale de l'organe de travail (4, 5), au nombre d'au moins un, déterminé à un instant (tₙ) immédiatement après l'exécution de la tâche, un indicateur d'usure à référence locale pour l'organe de travail (4, 5), au nombre d'au moins un.

4. Procédé selon la revendication 2 et 3, **caractérisé en ce que** l'on détermine à l'aide de l'indicateur d'usure à référence locale, les coûts engendrés suite à l'usure lors de l'exécution de la tâche.

5. Procédé selon la revendication 2 et 3 ou la revendication 4, **caractérisé en ce que** l'on détermine à l'aide de l'indicateur d'usure à référence locale, l'intervalle d'entretien pour l'organe de travail (4, 5), au nombre d'au moins un.

6. Procédé selon une des revendications 1 à 5, **caractérisé en ce que** l'on indique à l'aide d'un dispositif d'affichage (15) communiquant avec le dispositif de traitement (14) en vue de la transmission de données, l'état d'usure à référence locale de l'organe de travail (4, 5), au nombre d'au moins un, les coûts engendrés suite à l'usure lors de l'exécution de la tâche, la cause de l'usure, la stratégie de culture future sur la surface agricole (3), la stratégie de récolte future pour la surface agricole (3) et/ou l'intervalle d'entretien de l'organe de travail (4, 5), au nombre d'au moins un.

7. Procédé selon la revendication 6, **caractérisé en ce que** l'on indique à l'aide du dispositif d'affichage (15), une évolution de l'état d'usure à référence locale de l'organe de travail (4, 5), au nombre d'au moins un, et/ou de manière cartographiée l'état d'usure à référence locale de l'organe de travail (4, 5), au nombre d'au moins un.

8. Procédé selon une des revendications 1 à 7, **caractérisé en ce que** l'on détermine, à l'aide de plusieurs dispositifs capteurs (10), simultanément des données de fonctionnement d'une pluralité d'organes de travail (4, 5) de la machine de récolte (1), pour la pluralité d'instants (t₁...,ₙ) avant, pendant et/ou après l'exécution de la tâche, sachant que l'on détermine, à l'aide du dispositif de traitement (14), simultanément l'état d'usure à référence locale de la pluralité d'organes de travail (4, 5), en déterminant de préférence un état d'usure de la machine de récolte (1) sur la base de l'état d'usure à référence locale de la pluralité d'organes de travail (4, 5).

9. Procédé selon une des revendications 1 à 8, **caractérisé en ce que** la détermination de l'état d'usure à référence locale de l'organe de travail (4, 5), au nombre d'au moins un, des coûts engendrés suite à l'usure lors de l'exécution de la tâche, de la cause de l'usure, de la stratégie de culture future sur la surface agricole (3), de la stratégie de récolte future pour la surface agricole (3) et/ou de l'intervalle d'entretien de l'organe de travail (4, 5), au nombre d'au moins un, est effectuée en tenant compte de données de référence (13).

10. Procédé selon la revendication 9, **caractérisé en ce que** les données de référence (13) comprennent des données de diagramme caractéristique de l'organe de travail (4, 5), au nombre d'au moins un, et/ou de la machine de récolte (1), des données historiques concernant des états d'usure de l'organe de travail (4, 5), au nombre d'au moins un, des données géométriques de l'organe de travail (4, 5), au nombre d'au moins un, et/ou de la machine de récolte (1), des ensembles de charges de l'organe de travail (4, 5), au nombre d'au moins un, et/ ou de la machine de récolte (1), des données météorologiques et/ou des données agronomiques de la surface agricole (3), notamment des données relatives au sol, des données de culture, des données de rendement et/ou des données relatives à la surface.

11. Procédé selon une des revendications 1 à 10, **caractérisé en ce que** la base de données (12), le dispositif de traitement (14) et/ou le dispositif d'affichage (15) sont réalisés respectivement comme dispositif externe ou comme dispositif associé à la machine de récolte (1).

12. Procédé selon la revendication 11, **caractérisé en ce que** la base de données (12) et le dispositif de traitement (14) sont réalisés comme dispositifs externes et constituent ensemble un système de gestion (16).

13. Procédé selon la revendication 12, **caractérisé en ce que** le système de gestion (16) est associé à une entité qui est indépendante d'une personne à laquelle est associée la machine de récolte (1) et/ou la surface agricole (3) sur laquelle la tâche est exécutée, sachant qu'une utilisation du système de gestion (16) pour l'exécution des étapes de procédé est validée par l'entité en présence d'une autorisation.

14. Procédé selon une des revendications 1 à 13, **caractérisé en ce que** le dispositif capteur (10), au nombre d'au moins un, est un dispositif capteur (10) à fonctionnement inductif, et l'organe de travail (4, 5), au nombre d'au moins un, est un tambour porte-couteaux (8), muni d'une pluralité de couteaux de hachage (9), d'un dispositif hacheur (7) d'une récolteuse-hacheuse-chargeuse (2), le dispositif de traitement (14) déterminant l'état d'usure à référence locale d'un ou plusieurs couteaux de hachage (9) du tambour porte-couteaux (8).

15. Machine de récolte (1) agricole automotrice, en particulier récolteuse-hacheuse-chargeuse (2), comprenant
au moins un organe de travail (4, 5),
au moins un dispositif capteur (10),
un dispositif de localisation (11),
une base de données (12),
un dispositif de traitement (14), et
un dispositif d'affichage (15),
qui sont adaptés de manière à exécuter les étapes du procédé selon une des revendications 1 à 14.
